# EUROPÄISCHE PATENTSCHRIFT

(11) **EP 1 899 617 B1**
(45) Veröffentlichungstag und Bekanntmachung des Hinweises auf die Patenterteilung: **13.02.2019**
(21) Anmeldenummer: 06753263.0
(22) Anmeldetag: 10.06.2006
(51) Int. Cl.: F16D 13/68, F16D 21/06, F16F 15/12, F16D 13/75

(54) **KUPPLUNGSSYSTEM**
COUPLING SYSTEM
SYSTEME D'EMBRAYAGE

(30) Priorität: 28.06.2005 DE 102005030504
(43) Veröffentlichungstag der Anmeldung: 19.03.2008
(73) Patentinhaber: Schaeffler Technologies AG & Co. KG, 91074 Herzogenaurach (DE)
(72) Erfinder: KROLL, Jürgen Dr., 77815 Bühl (DE); MENDE, Hartmut, 77815 Bühl (DE); ZHOU, Bin, 77815 Bühl (DE)
(86) Internationale Anmeldenummer: PCT/DE2006/000995
(87) Internationale Veröffentlichungsnummer: WO 2007/000131

(56) Entgegenhaltungen:
- EP-A1- 0 223 442
- EP-A2- 1 384 911
- WO-A-2005/031188
- DE-A- 10 205 767
- DE-U1- 8 815 843
- FR-A- 2 118 762
- JP-A- 59 159 431
- US-A- 3 060 705

## Beschreibung

Die Erfindung betrifft ein Kupplungsaggregat, derart, wie in EP1384911 und DE1020576 offenbart. Der vorliegenden Erfindung lag die Aufgabe zugrunde, beim Zusammenbau von Motor und Getriebe eine einwandfreie Antriebsverbindung zwischen den beiden Untereinheiten zu gewährleisten. Insbesondere soll vermieden werden, dass innerhalb der zwischen den Untereinheiten vorhandenen Antriebsverbindung Geräusche, wie zum Beispiel Klappergeräusche, entstehen. Weiterhin soll die Antriebsverbindung in besonders einfacher und kostengünstiger Weise realisierbar sein.

Gemäß der vorliegenden Erfindung wird dies bei einem Kupplungsaggregat der eingangs beschriebenen Art mit den Merkmalskombination der Patentansprüche unter anderem dadurch erzielt, dass die beiden Untereinheiten über eine Antriebsverbindung miteinander koppelbar sind, die zumindest eine axiale Steckverbindung umfasst, welche ineinander greifende Profilierungen und Gegenprofilierungen aufweist, über die die Drehkoppelung zwischen den beiden Untereinheiten herstellbar ist, wobei zumindest einzelne der die Profilierungen und Gegenprofilierungen bildenden Profile verspannt sind.

Eine derartige Verspannung kann in radialer Richtung erfolgen, wodurch ein eventuell vorhandenes Verdrehspiel beseitigt werden kann. In vorteilhafter Weise kann die Verspannung zwischen den Profilierungen und Gegenprofilierungen jedoch auch in Umfangsrichtung erfolgen. Hierfür können zumindest einzelne der die Profilierungen und/oder Gegenprofilierungen bildenden Profile aus zwei Bauteilen mit Verzahnungen bestehen, wobei die Verzahnungen in Umfangsrichtung auf einer Gegenverzahnung (Gegenprofilierungen und/oder Profilierungen) verspannt sind. Dadurch kann ein praktisch spielfreier Eingriff zwischen den entsprechenden Profilen gewährleistet werden. Aufgrund der zwischen den beiden Bauteilen vorhandenen Verspannung kann auch eine gewisse drehelastische Verbindung zwischen den Profilierungen und Gegenprofilierungen realisiert werden. Die Verdrehsteifigkeit dieser elastischen Verspannung ist abhängig von der Kraft, die durch zumindest einen die beiden Bauteile verspannenden Energiespeicher, wie zum Beispiel einer Schraubendruckfeder, aufgebracht wird. Die zwischen den Profilierungen und Gegenprofilierungen erzeugte Verdrehsteifigkeit kann dabei in vorteilhafter Weise in der Größenordnung zwischen 10 und 60 Nm/° liegen.

Um die Montage der Profilierungen und der Gegenprofilierungen zu erleichtern, kann es zweckmäßig sein, wenn zumindest einzelne der die Profilierungen und/oder die Gegenprofilierungen bildenden Profile aus in Umfangsrichtung in entgegengesetzte Richtungen zueinander verspannten Teilprofilen, wie insbesondere Teilverzahnungen, gebildet sind, welche entgegen der auf sie einwirkenden Verspannkraft in einer winkelmäßigen Position mittels zumindest eines Halteelementes gehalten sind, welche ein Zusammenfügen der die axiale Steckverbindung bildenden Profilierungen und Gegenprofilierungen ermöglicht. Beim Zusammenfügen oder nach dem Zusammenfügen der Profilierungen und Gegenprofilierungen ist das Halteelement in eine Lage bringbar, die zumindest eine partielle, umfangsmäßige Verspannung der Steckverbindung bewirkt. Die Teilprofile bilden in der Breite veränderbare Profile bzw. Gegenprofile, die in der Lücke, in die sie jeweils eingreifen, spielfrei verspannt sind.

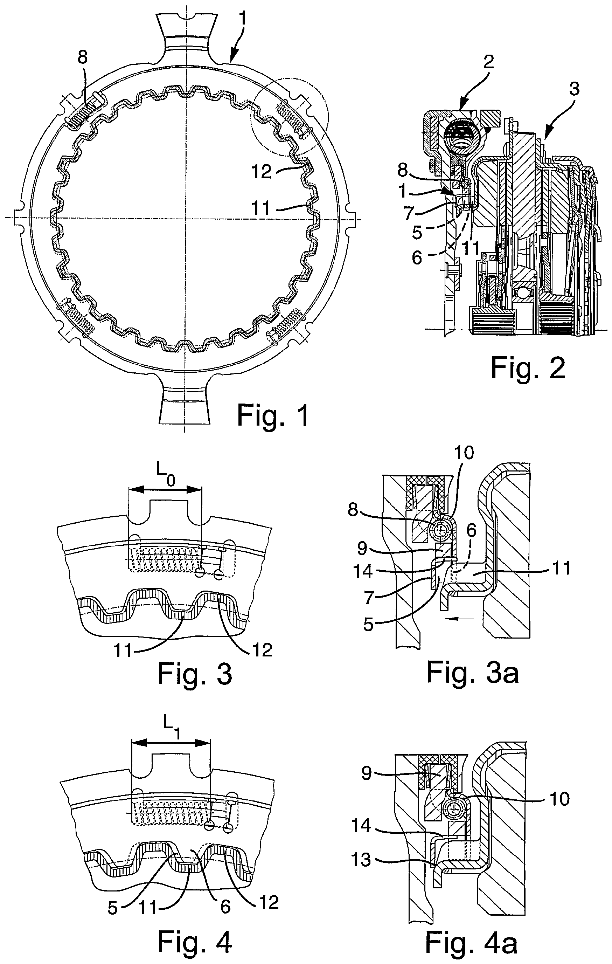

Anhand der Figuren 1 bis 4a sei die Erfindung näher erläutert:
Um Geräusche in der Verzahnungsverbindung 1 zwischen dem Dämpfer 2 (ZMS) und der Doppelkupplung 3 zu vermeiden, ist eine vorzugsweise bis ca. 40 Nm Belastung noch spielfreie Verzahnungsverbindung 1 vorgesehen. Außerdem soll diese Verzahnungsverbindung 1 bei Montage leicht einführbar sein.

Das Lösungsprinzip ist eine Doppelverzahnung 5, 6 mit Federverspannkraft, die durch einen Arretierring 7 die Montageanforderungen erfüllen. Die am Umfang angeordneten, vorgespannten Druckfedern 8 drücken die beiden mit Innenverzahnung 5, 6 vorgesehenen Bleche 9, 10 (den Flansch 9 und das Blech 10) auseinander. Im Zugbetrieb leitet der Flansch 9 das Motormoment direkt an den Mitnehmerring 11, der eine Außenverzahnung 12 als Gegenstück besitzt. Im Schubbetrieb drückt der Mitnehmerring 11 durch die Verzahnung gegen das Blech 10 und leitet das Schubmoment über die Druckfedern 8 an den Flansch 9 weiter. Die Federkraft soll groß genug sein, um das Abheben der Verzahnung 5 und/oder 6 in einigen Betriebszuständen zu vermeiden. Der Arretierring 7 sorgt dafür, dass die beiden Innenverzahnungen 5, 6 vor dem Zusammenfügen von Dämpfer 2 und Kupplungsaggregat 3 bündig ausgerichtet werden, damit die Außenverzahnung 12 des Mitnehmerringes bei Montage leicht in Eingriff gebracht werden kann mit den Verzahnungen 5, 6. Die Stirnseite 13 des Mitnehmerrings 11 schiebt den Arretierring 7 bei Montage aus der Arretierposition (Fig. 3 und 3a) und sobald die Arretierfinger 14 aus dem Blech 6 gleiten, spannen die beiden innenverzahnenden Teile 5, 6 das hier durch den Mitnehmerring 11 gebildete Gegenteil 11 fest.

Die Verzahnungen 5 und 6 bilden also Teilprofile, die vor dem Zusammenfügen der Profilierungen und Gegenprofilierungen bildenden Verzahnungen 5, 6 einerseits und 12 andererseits entgegen der auf sie einwirkenden Verspannkraft in einer winkelmäßigen Position mittels eines Halteelementes gehalten sind, das hier durch den Arretierring 7 gebildet ist. Dadurch wird ein einfaches Zusammenstecken der beiden Untereinheiten 2 und 3 beim Zusammenbau von Motor und Getriebe gewährleistet. Die hier durch den Dämpfer 2 gebildete Untereinheit ist motorseitig vormontiert, wohingegen die zweite, hier durch das Kupplungsaggregat 3 gebildete Untereinheit getriebeseitig vormontiert wird.

Bei dem dargestellten und beschriebenen Ausführungsbeispiel erfolgt beim Zusammenfügen der beiden Untereinheiten 2 und 3 eine automatische Verspannung zwischen den durch die Innenverzahnungen 5, 6 einerseits und die Außenverzahnung 12 andererseits gebildeten Profilierungen und Gegenprofilierungen. Diese automatische Verspannung erfolgt durch eine axiale Verschiebung des durch den Arretierungsring 7 gebildeten Halteelementes. Die Entriegelung des Verspannungszustandes zwischen den beiden Teilen 9 und 10 kann jedoch auch erst nach Herstellung der axialen Steckverbindung zwischen den beiden hier durch den Dämpfer 2 und dem Kupplungsaggregat 3 gebildeten Untereinheiten erfolgen, beispielsweise manuell, mittels eines Hilfswerkzeuges.

Gemäß einem anderen Lösungsprinzip kann die durch den Ring 7 gebildete Arretierung entfallen, wobei dann die beiden Verzahnungen 5 und 6 derart umfangsmäßig zueinander versetzt sind, dass die zwischen den Verzahnungen 5 und 6 verbleibenden axialen Zahnlücken eine geringere Breite aufweisen als die umfangsmäßige Breite, zumindest einzelner Zähne der Außenverzahnung 12. Die Flanken der die Verzahnungen 5, 6 und 12 bildenden Zähne sind dabei in axialer Richtung derart aufeinander abgestimmt, dass beim axialen Zusammenfügen der Verzahnungen 5, 6 und 12 die Verzahnungen 5, 6 entgegen der Wirkung der Federn 8 in Umfangsrichtung verdreht werden. Dadurch wird gewährleistet, dass nach der axialen Zusammenführung der beiden Untereinheiten 2 und 3 zumindest einzelne Zähne der Außenverzahnung 12 zwischen Zähnen der Verzahnungen 5 und 6 umfangsmäßig verspannt sind. Das axiale Einfügen der Verzahnung 12 in die durch die Verzahnungen 5 und 6 gebildeten Zahnlücken geringerer Breite kann in einfacher Weise durch entsprechende Ausbildung der axialen Stirnfläche bzw. des Überganges zwischen der Stirnfläche und den Zähnen der Verzahnung 12 gewährleistet werden. Es können zum Beispiel entsprechende Abrundungen bzw. Einfädelungsschrägen zumindest im Stirnbereich der die Verzahnung 12 bildenden Zähne vorgesehen werden.

Bezüglich des allgemeinen Aufbaues und der Funktionsweise des in der vorliegenden Anmeldung beschriebenen Kupplungsaggregates sowie der Vormontage und des Zusammenbaus der dieses bildenden Untereinheiten, welche einerseits motorseitig und andererseits getriebeseitig vormontierbar sind, wird auf die DE 10 2005 027 608 und insbesondere auf die DE 10 2004 042 640.6 verwiesen. In der letztgenannten Anmeldung ist bereits eine Steckverbindung zwischen einem motorseitig vormontierbaren Dämpfungssystem und einer getriebeseitig vormontierbaren Kupplungsvorrichtung offenbart, wobei die Kupplungsvorrichtung als Zweischeibenkupplung bzw. Doppelkupplung ausgebildet ist.

### Bezugsz ichenliste

- 1: Verzahnungsverbindung
- 2: Dämpfer
- 3: Doppelkupplung
- 4: -
- 5: Doppelverzahnung
- 6: Doppelverzahnung
- 7: Arretierring
- 8: Druckfedern
- 9: Flansch
- 10: Blech
- 11: Mitnehmerring
- 12: Außenverzahnung
- 13: Stirnseite
- 14: Arretierfinger

## Patentansprüche

1. Kupplungsaggregat das aus wenigstens zwei Untereinheiten besteht, wobei die eine Untereinheit in Form eines Dämpfers (2) motorseitig, an der Abtriebswelle des Motors vormontierbar ist und die andere Untereinheit in Form einer Doppelkupplung (3) getriebeseitig vormontierbar ist, wobei beide Untereinheiten (2, 3)
über eine axiale Steckverbindung (1), die ineinandergreifende Profilierungen (5,6) und Gegenprofilierungen (12) umfasst, und über die die Drehkopplung zwischen den beiden Untereinheiten (2, 3) hergestellt ist, miteinander gekoppelt sind, derart, dass die Profilierungen (5, 6) und Gegenprofilierungen (12) verspannt sind und die Verspannung der Profilierungen (5, 6) und Gegenprofilierungen (12) über Federmittel (8) erfolgt, , und die Profilierungen (5, 6) aus zwei Bauteilen (9, 10) mit Verzahnungen gebildet sind, wobei die Verzahnungen in Umfangsrichtung auf einer Gegenverzahnung der Gegenprofilierungen (12) verspannt sind, **dadurch gekennzeichnet, dass** die Verspannung der Profilierungen (5, 6) und Gegenprofilierungen (12) in Umfangsrichtung durch ein Auseinanderdrücken der zwei Bauteile (9, 10) mittels Federmittel (8) erfolgt.

2. Kupplungsaggregat das aus wenigstens zwei Untereinheiten besteht, wobei die eine Untereinheit in Form eines Dämpfers (2) motorseitig, an der Abtriebswelle des Motors vormontierbar ist und die andere Untereinheit in Form einer Doppelkupplung (3) getriebeseitig vormontierbar ist, wobei beide Untereinheiten (2, 3)
über eine axiale Steckverbindung (1), die ineinandergreifende Profilierungen (5, 6) und Gegenprofilierungen (12) umfasst, und über die die Drehkoppplung zwischen den beiden Untereinheiten (2, 3) hergestellt ist, miteinander gekoppelt sind, derart, dass die Profilierungen (5, 6) und Gegenprofilierungen (12) verspannt sind und die Verspannung der Profilierungen (5, 6) und Gegenprofilierungen (12) über Federmittel (8) erfolgt, , und die Gegenprofilierungen (12) aus zwei Bauteilen (9, 10) mit Verzahnungen gebildet sind, wobei die Verzahnungen in Umfangsrichtung auf einer Gegenverzahnung der Profilierungen (5, 6) verspannt sind, **dadurch gekennzeichnet, dass** die Verspannung der Profilierungen (5, 6) und Gegenprofilierungen (12) in Umfangsrichtung durch ein Auseinanderdrücken der zwei Bauteile (9, 10) mittels Federmittel (8) erfolgt.

3. Kupplungsaggregat nach einem der Ansprüche 1 oder 2, **dadurch gekennzeichnet, dass** die Profilierungen (5, 6) und Gegenprofilierungen (12) aus jeweils zwei Bauteilen (9, 10) mit Verzahnungen gebildet sind, wobei die Verzahnungen in Umfangsrichtung auf einer Gegenverzahnung der Gegenprofilierungen (12) und Profilierungen (5, 6) verspannt sind

4. Kupplungsaggregat nach Anspruch 4, **dadurch gekennzeichnet, dass** die Federmittel (8) eine Verdrehsteifigkeit in der Größenordnung zwischen 10 und 60 Nm erzeugen.

5. Kupplungsaggregat nach einem der Ansprüche 1 bis 4, **dadurch gekennzeichnet, dass** zumindest einzelne der die Profilierungen (5, 6) und/oder die Gegenprofilierungen (12) bildenden Profile aus in Umfangsrichtung in entgegengesetzte Richtungen zueinander verspannten Teilprofilen gebildet sind, die entgegen der auf sie einwirkenden Verspannkraft in einer winkelmäßigen Position mittels zumindest eines Halteelementes (7) gehalten sind, welche ein Zusammenfügen der die axiale Steckverbindung (1) bildenden Profilierungen (5, 6) und Gegenprofilierungen (12) ermöglicht, wobei beim Zusammenfügen oder nach dem Zusammenfügen der Profilierungen (5, 6) und Gegenprofilierungen (12) das Halteelement (7) in eine Lage bringbar ist, die zumindest eine partielle, umfangsmäßige Verspannung der Steckverbindung (1) bewirkt.

## Claims

1. Clutch assembly which consists of at least two subunits, it being possible for the one subunit in the form of a damper (2) to be pre-mounted on the engine side on the output shaft of the engine and it being possible for the other subunit in the form of a double clutch (3) to be pre-mounted on the transmission side, the two subunits (2, 3) being coupled to one another via an axial plug-in connection (1) which comprises interlocking profile systems (5, 6) and counter-profile systems (12), and via which the rotary coupling between the two subunits (2, 3) is established, in such a way that the profile systems (5, 6) and counter-profile systems (12) are clamped, and the clamping of the profile systems (5, 6) and counter-profile systems (12) takes place via spring means (8), and the profile systems (5, 6) are formed from two components (9, 10) with spline systems, the spline systems being clamped in the circumferential direction on a counter-spline system of the counter-profile systems (12), **characterized in that** the clamping of the profile systems (5, 6) and counter-profile systems (12) in the circumferential direction takes place by way of the two components (9, 10) being pressed apart from one another by means of spring means (8).

2. Clutch assembly which consists of at least two subunits, it being possible for the one subunit in the form of a damper (2) to be pre-mounted on the engine side on the output shaft of the engine and it being possible for the other subunit in the form of a double clutch (3) to be pre-mounted on the transmission side, the two subunits (2, 3) being coupled to one another via an axial plug-in connection (1) which comprises interlocking profile systems (5, 6) and counter-profile systems (12), and via which the rotary coupling between the two subunits (2, 3) is established, in such a way that the profile systems (5, 6) and counter-profile systems (12) are clamped, and the clamping of the profile systems (5, 6) and counter-profile systems (12) takes place via spring means (8), and the counter-profile systems (12) are formed from two components (9, 10) with spline systems, the spline systems being clamped in the circumferential direction on a counter-spline system of the profile systems (5, 6), **characterized in that** the clamping of the profile systems (5, 6) and counter-profile systems (12) in the circumferential direction takes place by way of the two components (9, 10) being pressed apart from one another by means of spring means (8) .

3. Clutch assembly according to either of Claims 1 and 2, **characterized in that** the profile systems (5, 6) and counter-profile systems (12) are formed from in each case two components (9, 10) with spline systems, the spline systems being clamped in the circumferential direction on a counter-spline system of the counter-profile systems (12) and profile systems (5, 6).

4. Clutch assembly according to Claim 4, **characterized in that** the spring means (8) produce a torsional rigidity in the order of magnitude of between 10 and 60 Nm.

5. Clutch assembly according to one of Claims 1 to 4, **characterized in that** at least single ones of the profiles which form the profile systems (5, 6) and/or the counter-profile systems (12) are formed from part profiles which are clamped with respect to one another in the circumferential direction in opposed directions and are held in an angular position by means of at least one holding element (7) counter to the clamping force which acts on them and makes it possible to join together the profile systems (5, 6) and counter-profile systems (12) which form the axial plug-in connection (1), it being possible, during or after the joining together of the profile systems (5, 6) and counter-profile systems (12), for the holding element (7) to be moved into a position which brings about at least a partial, circumferential clamping of the plug-in connection (1).

## Revendications

1. Système d'embrayage qui se compose d'au moins deux sous-unités, dans lequel une première sous-unité en forme d'amortisseur (2) peut être pré-montée côté moteur sur l'arbre de sortie du moteur et l'autre sous-unité en forme de double embrayage (3) peut être pré-montée côté boîte de vitesses, dans lequel les deux sous-unités (2, 3) sont couplées l'une à l'autre par une liaison embrochée axiale (1), qui comprend des profilages (5, 6) et des contre-profilages (12) s'engageant les uns dans les autres, et par laquelle le couplage rotatif est établi entre les deux sous-unités (2, 3), de telle manière que les profilages (5, 6) et les contre-profilages (12) soient serrés et que le serrage des profilages (5, 6) et des contre-profilages (12) soit effectué par des moyens de ressort (8), et les profilages (5, 6) sont formés de deux composants (9, 10) avec des dentures, dans lequel les dentures sont serrées dans la direction périphérique sur une denture opposée des contre-profilages (12), **caractérisé en ce que** le serrage des profilages (5, 6) et des contre-profilages (12) en direction périphérique est effectué par un écartement des deux composants (9, 10) au moyen de moyens de ressort (8) .

2. Système d'embrayage qui se compose d'au moins deux sous-unités, dans lequel une première sous-unité en forme d'amortisseur (2) peut être pré-montée côté moteur sur l'arbre de sortie du moteur et l'autre sous-unité en forme de double embrayage (3) peut être pré-montée côté boîte de vitesses, dans lequel les deux sous-unités (2, 3) sont couplées l'une à l'autre par une liaison embrochée axiale (1), qui comprend des profilages (5, 6) et des contre-profilages (12) s'engageant les uns dans les autres, et par laquelle le couplage rotatif est établi entre les deux sous-unités (2, 3), de telle manière que les profilages (5, 6) et les contre-profilages (12) soient serrés et que le serrage des profilages (5, 6) et des contre-profilages (12) soit effectué par des moyens de ressort (8), et les contre-profilages (12) sont formés de deux composants (9, 10) avec des dentures, dans lequel les dentures sont serrées dans la direction périphérique sur une denture opposée des profilages (5, 6), **caractérisé en ce que** le serrage des profilages (5, 6) et des contre-profilages (12) en direction périphérique est effectué par un écartement des deux composants (9, 10) au moyen de moyens de ressort (8) .

3. Système d'embrayage selon une des revendications 1 ou 2, **caractérisé en ce que** les profilages (5, 6) et les contre-profilages (12) sont formés respectivement de deux composants (9, 10) avec des dentures, dans lequel les dentures sont serrées en direction périphérique sur une denture opposée des contre-profilages (12) et des profilages (5, 6).

4. Système d'embrayage selon la revendication 4, **caractérisée en ce que** les moyens de ressort (8) produisent une raideur à la torsion d'un ordre de grandeur compris entre 10 et 60 Nm.

5. Système d'embrayage selon l'une quelconque des revendications 1 à 4, **caractérisé en ce qu'**au moins certains des profils formant les profilages (5, 6) et/ou les contre-profilages (12) sont formés par des profils partiels serrés l'un sur l'autre dans des directions opposées en direction périphérique, qui sont maintenus contre la force de serrage agissant sur eux dans une position angulaire au moyen d'au moins un élément de maintien (7), qui permet une jonction des profilages (5, 6) et des contre-profilages (12) formant la liaison embrochée axiale (1), dans lequel lors de la jonction ou après la jonction des profilages (5, 6) et des contre-profilages (12), l'élément de maintien (7) peut être amené dans une position qui entraîne au moins un serrage partiel en direction périphérique de la liaison embrochée (1) .
